# EUROPÄISCHE PATENTSCHRIFT

(11) **EP 3 844 412 B1**
(45) Veröffentlichungstag und Bekanntmachung des Hinweises auf die Patenterteilung: **06.09.2023**
(21) Anmeldenummer: 19755291.2
(22) Anmeldetag: 29.07.2019
(51) Int. Cl.: F16D 23/14, F16B 2/00

(54) **BETÄTIGUNGSMECHANISMUS INSBESONDERE FÜR EINEN KUPPLUNGSSTELLER**
ACTUATION MECHANISM, IN PARTICULAR FOR A CLUTCH ACTUATOR
MÉCANISME D'ACTIONNEMENT, EN PARTICULIER POUR ACTIONNEUR D'EMBRAYAGE

(30) Priorität: 31.08.2018 DE 102018214884
(43) Veröffentlichungstag der Anmeldung: 07.07.2021
(73) Patentinhaber: KNORR-BREMSE Systeme für Nutzfahrzeuge GmbH, 80809 München (DE)
(72) Erfinder: GEIS-ESSER, Daniel, 81377 München (DE); SCHUDY, Jürgen, 80997 München (DE); KOCH, Alexander, 81825 München (DE)
(86) Internationale Anmeldenummer: PCT/EP2019/070346
(87) Internationale Veröffentlichungsnummer: WO 2020/043410

(56) Entgegenhaltungen:
- DE-A1- 2 944 648
- DE-A1- 3 414 834
- FR-A- 393 422
- US-A- 4 405 041

## Beschreibung

Die Erfindung betrifft einen Betätigungsmechanismus zur Umsetzung einer Betätigungskraft in eine Verschiebung eines Übertragungselementes. Ferner betrifft die Erfindung einen Kupplungssteller, der einen solchen Betätigungsmechanismus aufweist.

Aus der US 4 405 041 A ist ein Kupplungsbetätigungsmechanismus bekannt.

Die DE 29 44 648 A1 zeigt eine hydraulische Betätigungsvorrichtung zum Ausrücken einer Kupplung.

Die DE 34 14 834 A1 zeigt eine Kraftfahrzeug-Reibungskupplung mit lösbarer Schnappverbindung, um zwei Bauteile miteinander zu verbinden.

Schließlich zeigt die FR 393 422 A einen automatischen Spanner für Kupplungen.

Betätigungsmechanismen wandeln eine Betätigungskraft, welche auf ein Betätigungselement aufgebracht wird, in eine Verschiebung eines Übertragungselementes um, um beispielsweise eine Kupplung auszurücken, indem die Verschiebung in die Kupplung eingebracht wird. Jedoch können auch andere technische Vorrichtungen mittels eines solchen Betätigungsmechanismus' betätigt werden.

Ferner müssen jedoch unter bestimmten Bedingungen Relativbewegungen zwischen dem Betätigungselement und dem Übertragungselement zugelassen werden, um beispielsweise Verschleiß der technischen Vorrichtung, insbesondere von Reibbelägen der Kupplung, auszugleichen, wodurch Leerwege, die bei der Betätigung zu überwinden wären, vermieden werden. Die Verbindung zwischen dem Betätigungselement und dem Übertragungselement muss dabei bei Betätigung sicher gegen Durchrutschen ausgebildet sein, um insbesondere sicherheitskritische Situationen, wie beispielsweise das unerwünschte Einrücken einer Kupplung, zu vermeiden.

Daher ist es Aufgabe der vorliegenden Erfindung, einen Betätigungsmechanismus der oben beschriebenen Art und einen Kupplungssteller zur Verfügung zu stellen, die zumindest eines der oben genannten Probleme lösen.

Diese Aufgabe wird durch die Gegenstände der unabhängigen Ansprüche gelöst. Vorteilhafte Weiterbildungen sind Gegenstand der Unteransprüche.

Erfindungsgemäß ist ein Betätigungsmechanismus für eine Kupplung vorgesehen, aufweisend:
- ein Betätigungselement, das dazu ausgebildet ist, mit einer Betätigungskraft beaufschlagt und durch diese in einer Betätigungsrichtung verschoben zu werden,
- ein Übertragungselement, das dazu ausgebildet ist, eine Verschiebung in der Betätigungsrichtung auszuführen, und
- einen Kompensationsmechanismus, der dazu ausgebildet ist, eine Verstärkungsanpresskraft zur reibschlüssigen Übertragung der Betätigungskraft zwischen dem Übertragungselement und dem Betätigungselement aufzubringen, wenn eine Betätigungskraft auf das Betätigungselement aufgebracht wird, wobei

der Kompensationsmechanismus ein Reibelement und eine Gegenfläche aufweist, die dazu ausgebildet sind, die Verstärkungsanpresskraft durch Reibschluss bei Aufbringen der Betätigungskraft auszubilden, und
das Reibelement und die Gegenfläche dazu ausgebildet sind, die Verstärkungsanpresskraft durch eine Abstützkraft hervorzurufen, die aus einer Umlenkung der Betätigungskraft resultiert, wobei
die Verstärkungsanpresskraft mindestens den Betrag der Abstützkraft aufweist.

Besonders bevorzugt ist die Verstärkungsanpresskraft größer als die Abstützkraft.

Reibelement und Gegenfläche sind vorzugsweise so angeordnet, dass sie die Abstützkraft nicht in Wirkrichtung der Abstützkraft abstützen. Das bedeutet, dass eine sehr hohe Verstärkungsanpresskraft ausgebildet werden muss, um einen Kraftanteil zu erzeugen, der in Wirkrichtung der Abstützkraft dieser entgegenwirkt.

Vorzugsweise ist eine Senkrechte auf die Gegenfläche nicht parallel zu der Wirkrichtung der Abstützkraft.

Reibelement und Gegenfläche sind dabei so ausgebildet, dass sie durch die Abstützkraft aneinandergepresst werden.

Der Kompensationsmechanismus ist vorzugsweise dazu ausgebildet, die Verstärkungsanpresskraft zwischen dem Übertragungselement und dem Betätigungselement zu reduzieren, wenn keine Betätigungskraft auf das Betätigungselement aufgebracht wird, und/oder wenn sich das Betätigungselement in einer Endposition befindet. Wird die Betätigungskraft reduziert oder ganz zurückgenommen, löst sich die reibschlüssige Verbindung zwischen dem Reibelement und der Gegenfläche wieder. Dadurch wird ein Verklemmen des Reibelements verhindert.

Alternativ oder zusätzlich sind das Reibelement und die Gegenfläche dazu ausgebildet, eine Relativbewegung des Übertragungselementes gegenüber dem Betätigungselement parallel zur Betätigungsrichtung zu erlauben, wenn keine Betätigungskraft auf das Betätigungselement aufgebracht wird und/oder wenn sich das Betätigungselement in der Endposition befindet. Durch die Relativbewegung wird erreicht, dass zwischen Übertragungselement und Betätigungselement ein Längenausgleich stattfinden kann, der beispielsweise den Verschleiß in einer Kupplung ausgleichen kann.

Erfindungsgemäß ist die Gegenfläche als Fläche einer Nut ausgebildet, die sich entlang der Betätigungsrichtung erstreckt, und erfindungsgemäß ist das Reibelement als Feder ausgebildet, die dazu ausgebildet ist, in der Nut entlang der Betätigungsrichtung geführt zu werden. Reibelement und Nut stellen dabei eine Nut-Feder-Verbindung dar.

Die Nut ist vorzugsweise als sich quer zur Betätigungsrichtung verjüngende Nut ausgebildet, wobei die Gegenfläche und besonders bevorzugt eine weitere Gegenfläche, die sich entlang der Betätigungsrichtung erstreckt, die Verjüngung ausbilden. Dies ermöglicht ein Einführen des Reibelementes in die Nut parallel, bevorzugt senkrecht zur Betätigungsrichtung, wobei zwischen dem Reibelement und den Gegenfläche(n) die reibschlüssige Verbindung ausgebildet wird.

Die Gegenfläche(n) erstrecken sich vorzugsweise entlang der Betätigungsrichtung, wobei zwischen dem Reibelement und Gegenflächen(n) parallel zur Betätigungsrichtung keine formschlüssige Verbindung in Form von Anschlägen, Rasten, etc. vorgesehen ist. Vorzugsweise erfolgt die Übertragung der Betätigungskraft in Betätigungsrichtung ausschließlich über Reibung.

Werden das Reibelement und die Gegenfläche(n) quer, bevorzugt senkrecht, zur Betätigungsrichtung aufeinander zubewegt, so sind sie vorzugsweise dazu ausgebildet, um miteinander in Kontakt zu treten und einen Reibschluss auszubilden. Die Gegenfläche(n) sind somit vorzugsweise nicht parallel zu der Bewegungsrichtung des Reibelements quer, bevorzugt senkrecht, zur Betätigungsrichtung orientiert. Vorzugsweise weist der Kompensationsmechanismus ein Klemmelement auf, das zur Umlenkung der Betätigungskraft in die Abstützkraft ausgebildet ist, wobei die Höhe der Abstützkraft proportional zur Höhe der Betätigungskraft, vorzugsweise höher, ist. So kann vorteilhafterweise aus einer Betätigungskraft eine vorzugsweise höhere Abstützkraft gebildet werden, die das Reibelement mit den Gegenflächen kontaktiert. Vorzugsweise sind mehrere Klemmelemente vorgesehen, die weiter vorzugsweise rotationssymmetrisch zur Betätigungsrichtung angeordnet sind. Weiter vorzugsweise können die Klemmelemente in gleichen Winkelabständen angeordnet sein.

Zusätzlich ist der Kompensationsmechanismus dazu ausgebildet, die Verstärkungsanpresskraft insbesondere auf Null zu reduzieren. Dadurch wird vorteilhafterweise eine Relativbewegung zwischen dem Übertragungselement und dem Betätigungselement erlaubt, ohne dass beide durch gegenseitige Reibung, insbesondere zwischen dem Reibelement und den Gegenfläche(n), an der Relativbewegung behindert werden. Dadurch kann beispielsweise eine Kompensation bzw. Nachstellung des Übertragungselements gegenüber einer zu betätigenden Vorrichtung, wie einer Kupplung, erfolgen. Somit besteht die Möglichkeit Leerwege, welche beispielsweise durch Verschleiß der Kupplungsbeläge entstehen würden, zu kompensieren.

Das Klemmelement ist vorzugsweise einstückig mit dem Betätigungselement ausgebildet. Somit kann erreicht werden, dass das Klemmelement durch eine elastische Ausbildung der Verbindung zwischen dem Klemmelement und dem Betätigungselement elastisch auslenkbar ist.

Alternativ ist das Klemmelement über eine Gelenkverbindung, vorzugsweise eine momentfreie Gelenkverbindung, mit dem Betätigungselement verbunden. Eine momentfreie Gelenkverbindung ist dazu ausgebildet, lediglich Kräfte zwischen Klemmelement und Betätigungselement zu übertragen.

Vorzugsweise sind das Reibelement auf dem Betätigungselement oder dem Klemmelement und die Gegenfläche auf dem Übertragungselement vorgesehen oder es sind das Reibelement auf dem Übertragungselement und die Gegenfläche auf dem Betätigungselement oder dem Klemmelement vorgesehen.

Vorzugsweise sind auf mehreren Klemmelementen Reibelemente oder Gegenflächen vorgesehen.

Zwischen dem Betätigungselement und dem Übertragungselement ist vorzugsweise ein Spannelement vorgesehen, das dazu ausgebildet ist, zur Übertragung der Betätigungskraft auf das Übertragungselement eine Spannanpresskraft zu erzeugen, die so ausgebildet ist, dass sie die maximal übertragebare Betätigungskraft (=Maximalbetätigungskraft) erhöht, wobei die Spannanpresskraft zusätzlich zur Abstützkraft des Klemmelementes in Form einer Gesamtanpresskraft wirkt und damit die Maximalbetätigungskraft erhöht. Dadurch wird eine einfache Möglichkeit geschaffen, die Gesamtanpresskraft auszubilden, die sich aus der Abstützkraft des Klemmelementes und der Spannanpresskraft zusammensetzt.

Das Spannelement ist vorzugsweise als Federelement ausgebildet, das die Spannanpresskraft zwischen Übertragungselement und Klemmelement aufbringt.

Vorzugsweise ist das Federelement geschlossen, insbesondere als Ring ausgebildet, und dazu ausgebildet, die Spannanpresskraft vollumfänglich zwischen Übertragungselement und Betätigungselement aufzubringen.

Die Spannanpresskraft kann dabei leicht konstruktiv ausgelegt werden, indem beispielsweise eine bestimmte Federkonstante des Federelements gewählt wird. Somit ist bei einer zu erwartenden Dehnung des Spannelementes eine bestimmte Spannanpresskraft zu erwarten.

Die Endposition ist vorzugsweise durch einen Anschlag definiert, der gegenüber dem Übertragungselement und dem Betätigungselement ortsfest ausgebildet ist.

Vorzugsweise ist das Klemmelement dazu ausgebildet, in der Endposition des Betätigungselementes an dem Anschlag anzuliegen, wobei zwischen dem Anschlag und dem Klemmelement eine Kraft wirkt, die dem Reibschluss zwischen Reibelement und Gegenfläche entgegenwirkt.

Vorzugsweise ist eine Hebegeometrie vorgesehen, die dazu ausgebildet ist, das Reibelement von der Gegenfläche zu beabstanden, oder zumindest den Reibschluss zwischen Reibelement und Gegenfläche zu lösen.

Diese Hebegeometrie ist vorzugsweise in der Endposition, besonders bevorzugt an dem Anschlag vorgesehen. Die Hebegeometrie ist vorzugsweise als Rampe ausgebildet, gegen die beispielsweise das Klemmelement oder des Reibelement anläuft, wodurch die Beanstandung erfolgen kann.

Das Klemmelement oder das Reibelement ist vorzugsweise mit speziell dazu ausgebildet, um mit der Hebegeometrie in Kontakt zu treten. Besonders bevorzugt ist dafür eine Rampe an dem Klemmelement oder an dem Reibelement vorgesehen, die weiter bevorzugt dazu ausgebildet ist, gegen die Hebegeometrie, vorzugsweise gegen die Rampe der Hebegeometrie anzulaufen.

Vorzugweise sind die Gegenfläche(n) und/oder das Reibelement mit einem erhöhten Reibwert ausgebildet. Dadurch kann eine weitere Erhöhung der Maximalbetätigungskraft erreicht werden, wenn sichergestellt werden muss, dass relativ hohe Betätigungskräfte übertragen werden müssen. Der Reibwert kann dabei vorzugsweise durch Bearbeitung der Gegenfläche und/oder des Reibelements erhöht werden. So können beispielsweise quer zur Betätigungsrichtung verlaufende Rillen oder eine im Allgemeinen rauer gestaltete Oberfläche der Gegenfläche und/oder des Reibelements zielführend sein.

Vorzugsweise sind das Betätigungselement und das Übertragungselement bzw. der Kompensationsmechanismus dazu ausgebildet, dass bei Überschreiten einer Maximalbetätigungskraft durch die Betätigungskraft oder durch eine in das Übertragungselement eingeleitete Kraft, eine Relativbewegung zwischen Betätigungselement und Übertragungselement in Betätigungsrichtung einsetzt. Somit ist sichergestellt, dass das Übertragungselement und das Betätigungselement gegeneinander verschoben werden können, ohne eingeleitete Kräfte zu übertragen, die zu hoch sind und die Beschädigungen des Betätigungsmechanismus' oder mit dem Betätigungsmechanismus in Kontakt stehende Vorrichtungen, verursachen könnten.

Die Maximalbetätigungskraft, welche maximal durch die Reibschlussverbindung zwischen Betätigungselement und Übertragungselement übertragen werden kann, wird dabei direkt von der Verstärkungsanpresskraft definiert. Die Maximalbetätigungskraft ist dabei umso höher, je höher die Verstärkungsanpresskraft ist. Da die Verstärkungsanpresskraft aus der Betätigungskraft im Wesentlichen durch die bauliche Anordnung von Betätigungselement, Klemmelement und Übertragungselement, hervorgerufen wird, ist ein Übersetzungsverhältnis von Betätigungskraft zu Verstärkungsanpresskraft im Wesentlichen durch die konstruktive Gestaltung dieser Elemente möglich. Insbesondere ist hier auf die Verbindung zwischen Betätigungselement und Klemmelement einzugehen, welche vorzugsweise abknickend ausgeführt ist. Ferner ist die konstruktive Gestaltung von Reibelement und Gegenfläche(n) ausschlaggebend. Hier ist kann vor allem über den Winkel, mit dem die Kontaktflächen von Reibelement und Gegenfläche miteinander in Kontakt treten, insbesondere wenn die Gegenflächen Bestandteil einer Nut sind, die Höhe der Verstärkungsanpresskraft beeinflusst werden.

Der Betätigungsmechanismus ist vorzugsweise dazu ausgebildet, die Verstärkungsanpresskraft, vorzugsweise die Gesamtanpresskraft, zwischen dem Übertragungselement und dem Betätigungselement zu verringern, wenn sich das Betätigungselement in einer Endposition befindet, wobei die Verringerung vorzugsweise derart erfolgt, dass dadurch die Maximalbetätigungskraft verringert wird, und eine Relativbewegung zwischen Betätigungselement und Übertragungselement in Betätigungsrichtung ermöglicht wird. Die Verringerung der Gesamtanpresskraft kann somit auch so erfolgen, dass nach wie vor eine Anpresskraft aus Verstärkungsanpresskraft und Gesamtanpresskraft oder nur aus der Verstärkungsanpresskraft zwischen dem Übertragungselement und dem Betätigungselement anliegt. Dadurch wird die Maximalbetätigungskraft verringert wodurch die Relativbewegung zwischen Betätigungselement und Übertragungselement unter Einfluss einer Reibkraft zwischen Reibelement und Gegenfläche(n) erfolgt. Dies kann zur Kompensations- bzw. Nachstellbewegung sinnvoll sein, wenn gewünscht ist, dass ein Kontakt zwischen dem Reibelement und Gegenfläche(n), bestehen bleibt, um verzögerungsfrei bei Aufbringen einer Betätigungskraft eine Verstärkungsanpresskraft wirken zu lassen.

Vorzugsweise ist der Betätigungsmechanismus dazu ausgebildet, die Betätigungskraft pneumatisch, hydraulisch, mechanisch, elektrisch und/oder magnetisch auf das Betätigungselement aufzubringen. Bei pneumatischer oder hydraulischer Aufbringung der Betätigungskraft ist das Betätigungselement vorzugsweise mit einer Kolben-Zylinder-Anordnung in Kontakt oder das Betätigungselement ist als Kolben ausgebildet, der einen Druckraum eines Zylinders verschließt. Dadurch kann das Betätigungselement mit einer Druckkraft als Betätigungskraft beaufschlagt werden. Bei elektrischer oder magnetischer Aufbringung sind entsprechende Elemente vorgesehen, die die Betätigungskraft aus einem elektrischen oder magnetischen Feld erzeugen. Dazu sind beispielsweise elektrische Motoren, insbesondere Linearmotoren zu rechnen. Ansonsten ist auch eine mechanische Aufbringung, beispielsweise durch ein Gestänge, das mit dem Betätigungselement in Kontakt steht, möglich.

Erfindungsgemäß ist ferner ein Kupplungssteller vorgesehen, der einen Betätigungsmechanismus, wie oben beschrieben, aufweist, wobei der Kupplungssteller dazu ausgebildet ist, eine Kupplung mit dem Übertragungselement auszurücken.

Bevorzugt ist der Betätigungsmechanismus des Kupplungsstellers dazu ausgebildet, wenn keine Betätigungskraft auf das Betätigungselement wirkt, die Relativbewegung zwischen Betätigungselement und Übertragungselement freizugeben. Somit ist vorteilhafterweise sichergestellt, dass das Übertragungselement durch die Relativbewegung, wenn keine Betätigungskraft auf das Betätigungselement wirkt, einen Verschleiß der Kupplungsbeläge ausgleichen kann. Das Übertragungselement kann somit stets mit der Kupplung, insbesondere mit einem Ausrücklager der Kupplung in Kontakt bleiben, so dass keine Leerwege durch den Verschleiß entstehen können, welche bei Aufbringen einer Betätigungskraft auf das Betätigungselement zunächst überwunden werden müssten.

Das Übertragungselement ist vorzugsweise mit einer elastischen Vorspannkraft in Betätigungsrichtung beaufschlagt, die durch ein Federelement erzeugt wird, wobei die elastische Vorspannkraft so ausgebildet ist, dass sie, wenn keine Betätigungskraft auf das Betätigungselement aufgebracht wird, mit einer elastischen Vorspannkraft einer Kupplungsfeder im Gleichgewicht steht. Dadurch wird erreicht, dass ein ständiger Kontakt des Übertragungselements mit der Kupplung, insbesondere mit dem Ausrücklager, besteht.

Die bisher beschriebenen Ausführungsformen können beliebig miteinander kombiniert werden, um weitere Ausführungsformen zu erhalten, welche ebenfalls Gegenstände aufweisen, die den erfindungsgemäßen Gegenständen entsprechen. Nachfolgend erfolgt daher die Beschreibung bevorzugter Ausführungsformen der Erfindung unter Bezugnahme auf die beigefügten Zeichnungen.

Im Einzelnen zeigt:
- Fig. 1: eine prinzipielle Schnittansicht eines erfindungsgemäßen Betätigungsmechanismus,
- Fig. 2: eine Detailansicht der Verbindung zwischen Klemmelement und Übertragungselement, und
- Fig. 3: eine weitere Detailansicht der Verbindung zwischen Klemmelement und Übertragungselement.

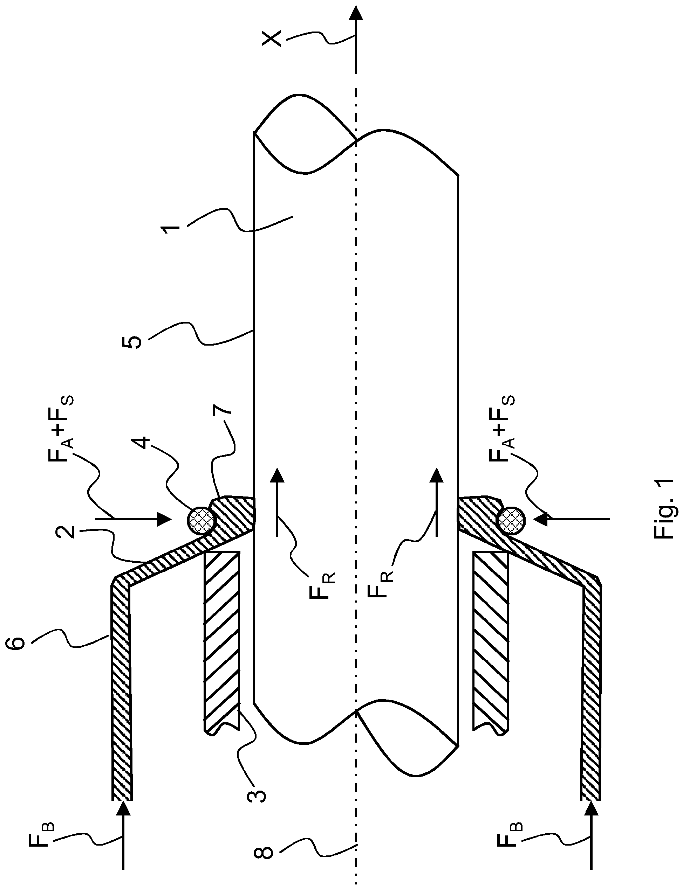

**Fig. 1** zeigt eine Schnittansicht eines erfindungsgemäßen Betätigungsmechanismus. Da diese Schnittansicht symmetrisch zu einer waagrechten Achse ist, werden lediglich die oberen Elemente des Betätigungsmechanismus mit Bezugszeichen beschrieben. Die unteren Elemente entsprechen den oberen, so dass hier keine Bezugszeichen nötig sind.

Es ist ein Betätigungsmechanismus gezeigt, der ein Übertragungselement 1 in Form einer zylindrischen Stange aufweist, die sich in der gezeigten Darstellung von links nach rechts erstreckt. Das Übertragungselement 1 weist eine Achse 8 auf, die ebenfalls von links nach rechts orientiert ist. Das Übertragungselement 1 ist dabei in einer Betätigungsrichtung X entlang der Achse 8 verschiebbar ausgebildet.

Anstelle eines zylindrischen Übertragungselementes 1 sind auch andere Querschnittsformen denkbar. So ist beispielsweise auch eine quadratische oder rechteckige Querschnittsform denkbar.

Ferner ist ein Betätigungselement 6 im Schnitt gezeigt, welches sich rotationssymmetrisch um die Achse 8 des Übertragungselements 1 um das Übertragungselement 1 erstreckt. Das Betätigungselement 6 kann dabei mit einer Betätigungskraft F_{B}, welche an der linken Seite des Betätigungselements 6 gezeigt ist, beaufschlagt werden. An der rechten Seite des Betätigungselements 6 geht das Betätigungselement 6 in ein Klemmelement 2 über. Dieses Klemmelement 2 ist einstückig mit dem Betätigungselement 6 ausgeführt und zu diesem abknickend orientiert. Alternativ kann das Klemmelement 2 auch über ein Gelenk, welches beispielsweise in dem Knick zwischen Betätigungselement 6 und Klemmelement 2 vorgesehen ist, mit dem Betätigungselement 6 verbunden werden. Dabei handelt es sich um eine mehrteilige Ausführung.

Das Klemmelement 2 erstreckt sich ausgehend von dem Betätigungselement 6 zu dem Übertragungselement 1 hin. Dabei berührt jedoch dessen freies Ende, entgegen der Darstellung in Fig. 1, das hier als Spannelementaufnahme 7 ausgebildet ist, nicht die Oberfläche 5 des Übertragungselements 1.

In der gezeigten Ausführungsform sind weitere Klemmelemente 2 rotationssymmetrisch um die Achse 8 angeordnet und mit dem Betätigungselement 6 einstückig ausgeführt.

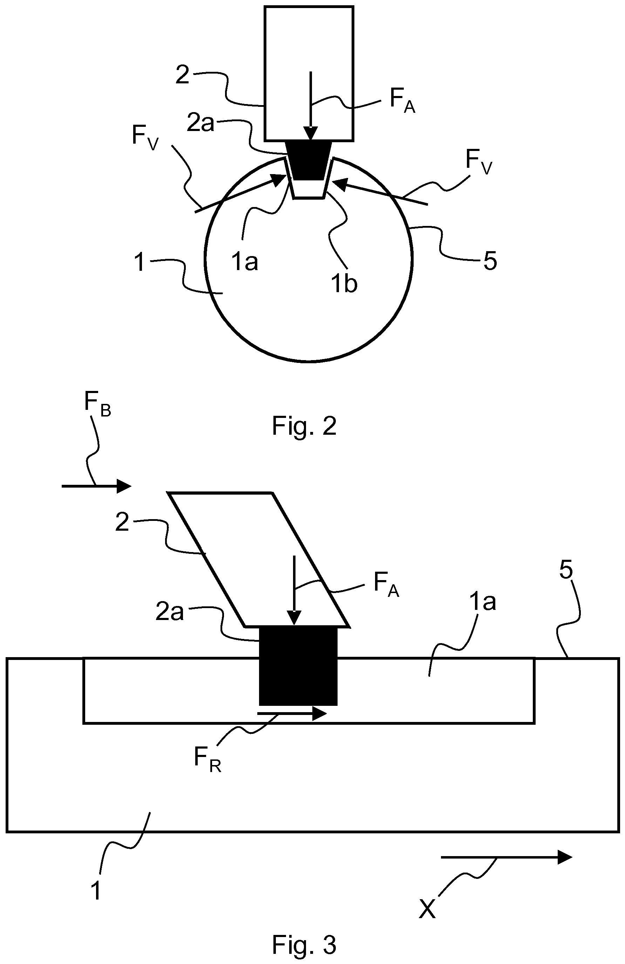

Die Beschreibung des weiteren Aufbaus des Betätigungsmechanismus, insbesondere der Kontaktstelle zwischen dem Klemmelement 2 und dem Übertragungselement 1, erfolgt unter Einbeziehung der Fig. 2 und Fig. 3. Daher wird nachfolgend auf sämtliche Zeichnungen Bezug genommen. Aus Gründen der Übersichtlichkeit ist in Fig. 2 und Fig. 3 lediglich das in Fig. 1 oben gezeigte Klemmelement 2 in einer Prinzipdarstellung gezeigt. Dieser Aufbau der Kontaktstelle kann auf weitere Klemmelemente, wie das in Fig. 1 unten, übertragen werden.

**Fig. 2** zeigt das Übertragungselement 1 sowie das Klemmelement 2 in Betätigungsrichtung X im Schnitt. **Fig. 3** zeigt dieselbe Anordnung im Schnitt wie Fig. 2 um 90° gedreht.

Das Übertragungselement 1 weist eine sich von der Oberfläche 5 des Übertragungselementes 1 in das Übertragungselement 1 hinein verjüngende Nut auf, die in Fig. 2 zwei Gegenflächen 1a, 1b aufweist. Diese Gegenflächen 1a, 1b erstrecken sich entlang der Betätigungsrichtung X. Dabei sind die Gegenflächen 1a, 1b nicht parallel orientiert, sondern sie bilden einen verjüngenden Querschnitt der Nut aus, wobei die Nut an der Oberfläche 5 des Übertragungselementes 1 die größte Öffnung aufweist.

Das Klemmelement 2 weist an seinem freien Ende ein Reibelement 2a in Form einer Feder auf. Diese ist in Korrespondenz zu den Gegenflächen 1a, 1b der Nut so ausgebildet, dass sie in der sich verjüngenden Nut in Betätigungsrichtung X geführt werden kann.

Ferner ist in Fig. 1 ein Anschlag 3 gezeigt, der ortsfest gegenüber den übrigen Elementen, insbesondere dem Betätigungselement 6 und dem Übertragungselement 1, ausgebildet ist. In der gezeigten Darstellung, welche einer Endposition des Betätigungselements 6 entspricht, liegt das Klemmelement 2 an dem Anschlag 3 an.

Dadurch wird das Klemmelement 2 mit einer Reaktionskraft beaufschlagt, welche dazu führt, dass die Spannelementaufnahme 7 weg von der Achse 8 gebogen wird. Dies erfolgt dadurch, dass die Reaktionskraft parallel zu einer Betätigungsrichtung X orientiert ist, wobei ein Biegemoment um die Verbindungsstelle zwischen Betätigungselement 6 und Klemmelement 2 entsteht, welches das in der Darstellung oben gezeigte Klemmelement 2 links herum und das das unten gezeigte Klemmelement 2 rechts herum beaufschlagt.

Die Funktionsweise des gezeigten Betätigungsmechanismus stellt sich wie nachfolgend erläutert dar.

In der gezeigten Darstellung in Fig. 1 befindet sich der Betätigungsmechanismus, insbesondere das Betätigungselement 6, in einer Endposition. Um nun mit der Betätigungskraft F_{B} eine Verschiebung des Übertragungselements 1 in Betätigungsrichtung X zu erreichen, muss die Betätigungskraft F_{B} auf das Übertragungselement 1 übertragen werden. Die Übertragung erfolgt zwischen Reibelement 2a und den Gegenflächen 1a, 1b insbesondere durch eine reibschlüssige Verbindung.

Wird eine Betätigungskraft F_{B} auf das Betätigungselement 6 aufgebracht, so löst sich dadurch das Klemmelement 2 von dem Anschlag 3. Dadurch entfällt die Reaktionskraft zwischen Klemmelement 2 und Anschlag 3, wodurch die Betätigungskraft F_{B} mit dem nun auf dem Übertragungselement 1 freistehenden Klemmelement 2 abgestützt werden muss. Diese Abstützung erfolgt zwischen dem Reibelement 2a und den Gegenflächen 1a, 1b, welche dadurch miteinander in Kontakt treten oder falls sie bereits in Kontakt sind, stärker aneinander gepresst werden.

Aufgrund der gewinkelten Anordnung von Betätigungselement 6 und Klemmelement 2 entsteht dadurch eine hohe Abstützkraft F_{A} in dem Klemmelement 2 zur Abstützung der Betätigungskraft F_{B}. Diese Abstützkraft F_{A} ist proportional zu der aufgebrachten Betätigungskraft F_{B} und wirkt anpressend zwischen dem Reibelement 2a und den Gegenflächen 1a, 1b. Das Verhältnis der Beträge der Betätigungskraft F_{B} und der Abstützkraft F_{A} kann dabei durch den Knick zwischen beiden Elementen festgelegt werden.

Die Abstützkraft F_{A} kann dabei lediglich reibschlüssig zwischen dem Reibelement 2a und den Gegenflächen 1a, 1b aufgenommen werden. Aufgrund der sich verjüngenden Ausbildung der Nut resultiert somit aus der Abstützkraft F_{A} des Klemmelementes 2 eine hohe Verstärkungsanpresskraft F_{V} zwischen dem Reibelement 2a und den Gegenflächen 1a, 1b.

Diese Verstärkungsanpresskraft F_{V} bildet die Reibschlussverbindung zur Übertragung der Betätigungskraft F_{B} auf das Übertragungselement 1 aus. Dadurch wird auch eine Maximalbetätigungskraft, welche zwischen dem Reibelement 2a und den Gegenflächen 1a, 1b übertragen werden kann, erhöht. Somit führt die Erzeugung der Verstärkungsanpresskraft F_{V} dazu, dass die Verschiebung des Übertragungselements 1 in Betätigungsrichtung X erfolgen kann, sobald die resultierende Maximalbetätigungskraft größer oder gleich als die aufgebrachte Betätigungskraft F_{B} ist.

Das Aufbringen der Betätigungskraft F_{B} auf das Betätigungselement 6 ruft somit zwischen dem Reibelement 2a und den Gegenflächen 1a, 1b eine Reibkraft F_{R} hervor, welche, wenn die Betätigungskraft F_{B} kleiner als die Maximalbetätigungskraft ist, dieser Betätigungskraft F_{B} entspricht. Das Übertragungselement 1 erfährt folglich eine Verschiebung in Betätigungsrichtung X, welche aus der Betätigungskraft F_{B} hervorgerufen wird.

Trotzdem weist die gezeigte Verbindung zwischen dem Reibelement 2a und den Gegenflächen 1a, 1b eine Maximalbetätigungskraft auf, wodurch ein Überlastschutz realisiert, welcher beispielsweise dann ein Durchrutschen des Übertragungselementes 1 gegenüber dem Betätigungselement 6 erlaubt, wenn eine zu große Gegenkraft entgegen der Betätigungsrichtung X in das Übertragungselement 1 und somit in den Betätigungsmechanismus eingeleitet wird.

Darüber hinaus verfügt der gezeigte Betätigungsmechanismus über eine automatische Verschleißnachstellung, welche dann aktiv ist, wenn sich das Betätigungselement 6 in der gezeigten Endposition befindet bzw. wenn das gezeigte Klemmelement 2 an dem Anschlag 3 anliegt. Dazu wird das Betätigungselement 6 oder das Klemmelement 2 mit einer Kraft entgegen der Betätigungsrichtung X beaufschlagt, die beispielsweise aus einer Feder (nicht gezeigt) stammt, so dass das Betätigungselement 6 bzw. das Klemmelement 2 in die Endposition gedrückt werden, wodurch die Reaktionskraft zwischen Anschlag 3 und Klemmelement 2 erhöht wird. Wie oben beschrieben, bewirkt die Reaktionskraft zwischen dem Anschlag 3 und dem Klemmelement 2, dass dadurch ein Biegemoment auf das Klemmelement 2 wirkt, welches das Klemmelement 2 weg von der Achse 8 beaufschlagt. Dabei sind die beteiligten Elemente so ausgebildet, dass das Biegemoment gegen die Verstärkungsanpresskraft F_{V} wirkt. Somit verringert sich eine Maximalbetätigungskraft zwischen Übertragungselement 1 und Betätigungselement 6, insbesondere zwischen dem Reibelement 2a und den Gegenflächen 1a, 1b, so dass eine Verschiebung des Übertragungselementes 1 gegenüber dem Betätigungselement 6 schon durch geringe Kräfte erreicht werden kann, welche von außen in das Übertragungselement 1 entgegen der Betätigungsrichtung X eingeleitet werden.

Eine solche Kraft kann beispielsweise durch eine Kupplungsfeder in das Übertragungselement 1 eingebracht werden, wobei das Übertragungselement 1 in diesem Fall dazu ausgebildet ist, beispielsweise mit einem Ausrücklager der Kupplung in Kontakt zu treten wobei die Kupplungskraft über das Ausrücklager in das Übertragungselement 1 eingeleitet wird.

Sind beispielsweise die Kupplungsbeläge stark verschlissen, so muss dieser Verschleiß ausgeglichen werden. Dies erfolgt dadurch, dass die Kupplungsfeder stärker auf das Übertragungselement 1 drückt. Da in der gezeigten Endposition, wie oben beschrieben, die Maximalbetätigungskraft zwischen dem Reibelement 2a und den Gegenflächen 1a, 1b stark verringert ist, und in einem bevorzugten Ausführungsbeispiel vorzugsweise auf Null reduziert werden kann, kann sich das Übertragungselement 1 nun frei gegenüber dem Betätigungselement 6 bewegen und dadurch den Kupplungsverschleiß ausgleichen. Bei Aufbringen einer Betätigungskraft F_{B} wird die Verstärkungsanpresskraft F_{V} und damit die Maximalbestätigungskraft zwischen dem Reibelement 2a und den Gegenflächen 1a, 1b wieder erhöht. Dies erfolgt spätestens dann, wenn sich das Klemmelement 2 von dem Anschlag 3 löst. In bevorzugten Ausführungsformen kann dies jedoch auch bereits früher erfolgen. Die Verbindung besteht demnach wieder zwischen dem Reibelement 2a und den Gegenflächen 1a, 1b, wodurch die Kupplung mit der Betätigungskraft F_{B} ausgerückt werden kann.

Der Betätigungsmechanismus kann darüber hinaus ausgebildet sein, das Lösen des Reibschlusses zwischen dem Reibelement 2a und den Gegenflächen 1a, 1b zu erleichtern. Beispielsweise kann eine Anlaufschräge (nicht gezeigt) vorgesehen sein, gegen die beispielsweise das Klemmelement 2 anläuft, wenn es sich der Endposition nähert. Durch die Anlaufschräge wird das Reibelement 2a aus der Nut gehoben oder zumindest die Verstärkungsanpresskraft F_{V} reduziert.

Zusätzlich ist in Fig. 1 ein optionales Spannelement 4 gezeigt, welches auf der Spannelementaufnahme 7 des Klemmelements 2 angeordnet ist. Die Spannelementaufnahme 7 ist dabei zur Aufnahme des Spannelements 4 entsprechend ausgebildet. Das Spannelement 4 ist hier als ringförmiges Federelement ausgebildet, welches sich rotationssymmetrisch um die Achse 8 des Übertragungselementes 1 erstreckt. Dabei ist das Spannelement 4 so ausgebildet, dass es in der gezeigten Darstellung weg von der Achse 8 durch die Spannelementaufnahme 7 geweitet wird. In der Folge bringt das Spannelement 4 eine Spannanpresskraft F_{S} von außen auf die Spannelementaufnahme 7 auf, wodurch das Reibelement 2a in die Nut und damit in die Gegenflächen 1a, 1b gepresst wird.

Dadurch erhöht das Spannelement 4 die wirkende Abstützkraft F_{A} um die Spannanpresskraft F_{S}. Diese kann durch Auslegung der Federkonstante des Spannelementes 4 und der zu erwarteten Weitung auf dem Kontaktabschnitt 7 berechnet werden.

Das Spannelement 4 führt also dazu, dass die Verstärkungsanpresskraft F_{V} zwischen dem Reibelement 2a und den Gegenflächen 1a, 1b weiter gesteigert werden kann wodurch die reibschlüssige Verbindung zwischen Übertragungselement 1 und Klemmelement 2 verstärkt wird und die Gefahr des Durchrutschens bei Aufbringen einer Betätigungskraft F_{B} verringert werden kann.

Darüber hinaus sind weitere Spannelemente 4 denkbar, die ebenso das Aufbringen einer Spannanpresskraft F_{S} ermöglichen. Beispielsweise kann anstatt eines Federelementes auch eine Schelle verwendet werden, die eine Einstellung der Spannanpresskraft F_{S} beispielsweise mittels einer Schraube erlaubt.

Da das Spannelement 4 optional zur Verbesserung des Reibschlusses hinzugefügt werden kann, sind auch Ausführungsformen denkbar, die weder Spannelement 4 noch Spannelementaufnahme 7 aufweisen.

Der gezeigte Betätigungsmechanismus ist, wie oben beschrieben, vorzugsweise in einem Kupplungssteller einsetzbar. Dabei kann das Prinzip der Übertragung der Betätigungskraft F_{B} von dem Betätigungselement 6 auf das Übertragungselement 1 sowohl für zentral, als auch für dezentral angeordnete Kupplungssteller angewendet werden. Ein zentral angeordneter Kupplungssteller ist beispielsweise so gegenüber einer Kupplung angeordnet, dass die Verschiebung des Übertragungselementes 1 in Betätigungsrichtung X zentral fluchtend mit dem Ausrücklager der Kupplung erfolgt. Die Verschiebung zum Ausrücken der Kupplung erfolgt hier direkt durch das Übertragungselement 1. Bei einem dezentralen Kupplungssteller ist das Übertragungselement 1 nicht in Betätigungsrichtung X zentral fluchtend mit dem Ausrücklager angeordnet. Die Verschiebung zum Ausrücken der Kupplung erfolgt hier indirekt, beispielsweise durch ein übersetzendes Gestänge. Ferner kann bei einem zentral angeordneten Kupplungssteller eine Welle, die mit einer Kupplungsseite in Verbindung steht, durch den Kupplungssteller geführt sein. Beispielsweise entspricht dann die Achse dieser Welle der Achse 8 des Übertragungselementes 1, wobei das Übertragungselement 1 hohl ausgeführt ist und die Welle das Übertragungselement 1 durchdringt. Diese und andere Bauformen von Kupplungsstellern beschränken jedoch den Gegenstand der Erfindung nicht.

### BEZUGSZEICHENLISTE

- 1: Übertragungselement
- 1a: Gegenfläche
- 1b: Gegenfläche
- 2: Klemmelement
- 2a: Reibelement
- 3: Anschlag
- 4: Spannelement
- 5: Oberfläche Übertragungselement
- 6: Betätigungselement
- 7: Spannelementaufnahme
- 8: Achse
- F_{A}: Abstützkraft
- F_{B}: Betätigungskraft
- F_{R}: Reibkraft
- F_{S}: Spannanpresskraft
- F_{V}: Verstärkungsanpresskraft
- X: Betätigungsrichtung

## Patentansprüche

1. Betätigungsmechanismus für eine Kupplung aufweisend:
- ein Betätigungselement (6), das dazu ausgebildet ist, mit einer Betätigungskraft (F_{B}) beaufschlagt und durch diese in einer Betätigungsrichtung (X) verschoben zu werden,
- ein Übertragungselement (1), das dazu ausgebildet ist, eine Verschiebung in der Betätigungsrichtung (X) auszuführen, und
- einen Kompensationsmechanismus, der dazu ausgebildet ist, eine Verstärkungsanpresskraft (Fv) zur reibschlüssigen Übertragung der Betätigungskraft (F_{B}) zwischen dem Übertragungselement (1) und dem Betätigungselement (6) aufzubringen, wenn eine Betätigungskraft (F_{B}) auf das Betätigungselement (6) aufgebracht wird, wobei
der Kompensationsmechanismus ein Reibelement (2a) und eine Gegenfläche (1a) aufweist, die dazu ausgebildet sind, die Verstärkungsanpresskraft (Fv) durch Reibschluss bei Aufbringen der Betätigungskraft (F_{B}) auszubilden, und
das Reibelement (2a) und die Gegenfläche (1a) dazu ausgebildet sind, die Verstärkungsanpresskraft (Fv) durch eine Abstützkraft (F_{A}) hervorzurufen, die aus einer Umlenkung der Betätigungskraft (F_{B}) resultiert, wobei
die Verstärkungsanpresskraft (Fv) mindestens den Betrag der Abstützkraft (F_{A}) aufweist, **dadurch gekennzeichnet, dass**
die Gegenfläche (1a) als Fläche einer Nut ausgebildet ist, die sich entlang der Betätigungsrichtung (X) erstreckt, und
das Reibelement (2a) als Feder ausgebildet ist, die dazu ausgebildet ist, in der Nut entlang der Betätigungsrichtung (X) geführt zu werden.

2. Betätigungsmechanismus nach Anspruch 1, wobei
der Kompensationsmechanismus dazu ausgebildet ist, die Verstärkungsanpresskraft (Fv) zwischen dem Übertragungselement (1) und dem Betätigungselement (6) zu reduzieren, wenn keine Betätigungskraft (F_{B}) auf das Betätigungselement (6) aufgebracht wird, und/oder wenn sich das Betätigungselement in einer Endposition befindet, und/oder wobei
das Reibelement (2a) und die Gegenfläche (1a) dazu ausgebildet sind, eine Relativbewegung des Übertragungselementes (1) gegenüber dem Betätigungselement (6) parallel zur Betätigungsrichtung (X) zu erlauben, wenn keine Betätigungskraft (F_{B}) auf das Betätigungselement (6) aufgebracht wird und/oder wenn sich das Betätigungselement (6) in der Endposition befindet.

3. Betätigungsmechanismus nach einem der vorangegangenen Ansprüche, wobei
die Nut als sich quer zur Betätigungsrichtung (X) verjüngende Nut ausgebildet ist, wobei die Gegenfläche (1a) und eine weitere Gegenfläche (1b), die sich entlang der Betätigungsrichtung (X) erstreckt, die Verjüngung ausbilden.

4. Betätigungsmechanismus nach einem der vorangegangenen Ansprüche, wobei
der Kompensationsmechanismus ein Klemmelement (2) aufweist, das zur Umlenkung der Betätigungskraft (F_{B}) in die Abstützkraft (F_{A}) ausgebildet ist, wobei
die Höhe der Abstützkraft (F_{A}) proportional zur Höhe der Betätigungskraft (Fe), vorzugsweise höher, ist, und/oder wobei
der Kompensationsmechanismus dazu ausgebildet ist, die Verstärkungsanpresskraft (Fv) insbesondere auf Null zu reduzieren.

5. Betätigungsmechanismus nach Anspruch 4, wobei
das Klemmelement (2) einstückig mit dem Betätigungselement (6) ausgebildet ist, oder über eine Gelenkverbindung, vorzugsweise eine momentfreie Gelenkverbindung, mit dem Betätigungselement (6) verbunden ist.

6. Betätigungsmechanismus nach einem der Ansprüche 4 oder 5, wobei
das Reibelement (2a) auf dem Betätigungselement (6) oder dem Klemmelement (2) und die Gegenfläche (1a) auf dem Übertragungselement (1) vorgesehen sind, oder wobei
das Reibelement (2a) auf dem Übertragungselement (1) und die Gegenfläche (1a) auf dem Betätigungselement (6) oder dem Klemmelement (2) vorgesehen sind.

7. Betätigungsmechanismus nach einem der vorangegangenen Ansprüche, wobei
zwischen dem Betätigungselement (6) und dem Übertragungselement (1) ein Spannelement (4) vorgesehen ist, das dazu ausgebildet ist, eine Spannanpresskraft (Fs) zu erzeugen, die so ausgebildet ist, dass sie die reibschlüssige Übertragung der Betätigungskraft (Fe) verbessert.

8. Betätigungsmechanismus nach Anspruch 7, wobei
das Spannelement (4) als Federelement ausgebildet ist, das die Spannanpresskraft (Fs) erzeugt, und
das Federelement geschlossen, insbesondere als Ring ausgebildet ist, und dazu ausgebildet ist, die Spannanpresskraft (Fs) vollumfänglich zwischen Übertragungselement (1) und Betätigungselement (6) aufzubringen.

9. Betätigungsmechanismus nach einem der Ansprüche 2 bis 8, wobei
die Endposition durch einen Anschlag (3) definiert ist, der gegenüber dem Übertragungselement (1) und dem Betätigungselement (6) ortsfest ausgebildet ist.

10. Betätigungsmechanismus nach Anspruch 9, wobei
das Klemmelement (2) dazu ausgebildet ist, in der Endposition des Betätigungselementes (6) an dem Anschlag (3) anzuliegen, und zwischen dem Anschlag (3) und dem Klemmelement (2) eine Kraft wirkt, die dem Reibschluss zwischen Reibelement (2a) und Gegenfläche (1a) entgegenwirkt.

11. Betätigungsmechanismus nach Anspruch 9 oder 10, wobei
in der Endposition, vorzugsweise an dem Anschlag (3), eine Hebegeometrie vorgesehen ist, die dazu ausgebildet ist, das Reibelement (2a) von der Gegenfläche (1a) zu beabstanden, oder zumindest den Reibschluss zwischen Reibelement (2a) und Gegenfläche (1a) zu lösen.

12. Betätigungsmechanismus nach einem der Ansprüche 2 bis 11, wobei
die Gegenfläche (1a, 1b) und/oder das Reibelement (2a) mit einem erhöhten Reibwert ausgebildet sind.

13. Betätigungsmechanismus nach einem der vorangegangenen Ansprüche, wobei
der Betätigungsmechanismus dazu ausgebildet ist, die Betätigungskraft (F_{B}) pneumatisch, hydraulisch, mechanisch, elektrisch und/oder magnetisch auf das Betätigungselement (6) aufzubringen.

14. Kupplungssteller, aufweisend einen Betätigungsmechanismus nach einem der Ansprüche 1 bis 13, wobei
der Kupplungssteller dazu ausgebildet ist, eine Kupplung mit dem Übertragungselement (1) auszurücken.

15. Kupplungssteller nach Anspruch 14, wobei
der Betätigungsmechanismus dazu ausgebildet ist, wenn keine Betätigungskraft (F_{B}) auf das Betätigungselement (6) wirkt, die Relativbewegung zwischen Betätigungselement (6) und Übertragungselement (1) freizugeben, und/oder wobei
das Übertragungselement (1) mit einer elastischen Vorspannkraft in Betätigungsrichtung (X) beaufschlagt ist, die durch ein Federelement erzeugt wird, wobei
die elastische Vorspannkraft so ausgebildet ist, dass sie, wenn keine Betätigungskraft (F_{B}) auf das Betätigungselement (6) aufgebracht wird, mit einer elastischen Vorspannkraft einer Kupplungsfeder im Gleichgewicht steht.

## Claims

1. An actuating mechanism for a clutch, having:
- an actuating element (6) that is configured to receive an actuating force (F_{B}) and to be moved by this actuating force (F_{B}) in a direction of actuation (X),
- a transmission element (1) that is configured to effect a movement in the direction of actuation (X), and
- a compensating mechanism that is configured to apply a reinforcing contact force (Fv) for the friction-locked transmission of the actuating force (F_{B}) between the transmission element (1) and the actuating element (6) when an actuating force (F_{B}) is applied to the actuating element (6),
this compensating mechanism having a friction element (2a) and a counter-face (1a) that are configured to create the reinforcing contact force (Fv) by means of friction locking when the actuating force (F_{B}) is applied, and
the friction element (2a) and the counterface (1a) being configured to induce the reinforcing contact force (Fv) by a supporting force (F_{A}) that results from a deflection of the actuating force (F_{B}),
the reinforcing contact force (Fv) having at least the magnitude of the supporting force (F_{A}),
**characterised in that**,
the counterface (1a) takes the form of the face of a groove that extends along the direction of actuation (X), and
the friction element (2a) takes the form of a spring that is configured to be guided along the groove that extends along the direction of actuation (X).

2. An actuating mechanism according to claim 1,
the compensating mechanism being configured to reduce the reinforcing contact force (Fv) between the transmission element (1) and the actuating element (6) when no actuating force (F_{B}) is applied to the actuating element (6), and/or when the actuating element is located in an end position, and/or
the friction element (2a) and the counter-face (1a) being configured to permit a relative movement of the transmission element (1) in relation to the actuating element (6) parallel to the actuation direction (X) when no actuating force (F_{B}) is applied to the actuating element (6) and/or when the actuating element (6) is located in the end position and/or

3. An actuating mechanism according to any one of the preceding claims,
the groove taking the form of a groove that tapers transversely in relation to the direction of actuation (X), the tapered portion being formed by the counterface (1a) and a further counterface (1b) that extends along the direction of actuation (X).

4. An actuating mechanism according to any one of the preceding claims,
the compensating mechanism having a clamping element (2) that is configured to deflect the actuating force (F_{B}) into the supporting force (F_{A}),
the magnitude of the supporting force (F_{A}) preferably being higher proportional to the magnitude of the actuating force (F_{B}), and/or
the compensating mechanism being configured to reduce the reinforcing pressing force (Fv), in particular to zero.

5. An actuating mechanism according to claim 4,
the clamping element (2) being configured in one piece with the actuating element (6) or being connected to the actuating element (6) via an articulated connection, preferably a torque-free articulated connection.

6. An actuating mechanism according to either of claims 4 or 5,
the friction element (2a) being provided on the actuating element (6) or the clamping element (2), and the counter-face (1a) being provided on the transmission element (1), or
the friction element (2a) being provided on the transmission element (1), and the counterface (1a) being provided on the actuating element (6) or the clamping element (2).

7. An actuating mechanism according to any one of the preceding claims,
there being provided between the actuating element (6) and the transmission element (1) a tensioning element (4) that is configured to generate a tensioning contact force (F_{S}) that is designed so as to improve the friction-locked transmission of the actuating force (F_{B}).

8. An actuating mechanism according to claim 7,
the tensioning element (4) taking the form of a spring element that generates the tensioning contact force (F_{S}), and
the spring element being of closed configuration, in particular being configured as a ring, and being configured to apply the tensioning contact force (F_{S}) to its full extent between the transmission element (1) and the actuating element (6).

9. An actuating mechanism according to any one of claims 2 to 8,
the end position being defined by a stop (3) that is configured so as to be stationary in relation to the transmission element (1) and the actuating element (6).

10. An actuating mechanism according to claim 9,
the clamping element (2) being configured to abut the stop (3) when the actuating element (6) is in the end position, and a force that counteracts the friction-fit between the friction element (2a) and the counterface (1a) acting between the stop (3) and the clamping element (2).

11. An actuating mechanism according to claim 9 or 10,
there being provided in the end position, preferably at the stop (3), a lifting geometry that is configured to maintain a distance between the friction element (2a) and the counterface (1a) or at least to release the friction fit between the friction element (2a) and the counter-face (1a).

12. An actuating mechanism according to any one of claims 2 to 11,
the counter-face (1a, 1b) and/or the friction element (2a) being configured with an increased coefficient of friction.

13. An actuating mechanism according to any one of the preceding claims,
the actuating mechanism being configured to apply the actuating force (F_{B}) to the actuating element (6) pneumatically, hydraulically, mechanically, electrically and/or magnetically.

14. A clutch actuator having an actuating mechanism according to any one of claims 1 to 13,
the clutch actuator being configured to disengage a clutch by means of the transmission element (1).

15. A clutch actuator according to claim 14,
the actuating mechanism being configured to disengage the relative movement between the actuating element (6) and the transmission element (1) when no actuating force (F_{B}) is acting on the actuating element (6), and/or
an elastic prestressing force generated by a spring element being applied to the transmission element (1) in the direction of actuation (X),
when no actuating force (F_{B}) is applied to the actuating element (6), the elastic prestressing force being designed so as to be in equilibrium with an elastic prestressing force of a clutch spring.

## Revendications

1. Mécanisme d'actionnement d'un embrayage comprenant :
- un élément (6) d'actionnement, qui est constitué pour être soumis à une force (Fs) d'actionnement et être déplacé dans un sens (X) d'actionnement,
- un élément (1) de transmission, qui est constitué pour effectuer un déplacement dans le sens (X) d'actionnement, et
- un mécanisme de compensation, qui est constitué pour appliquer une force (Fv) de pression de renfort pour la transmission à frottement de la force (F_{B}) d'actionnement entre l'élément (1) de transmission et l'élément (6) d'actionnement, lorsqu'une force (F_{B}) d'actionnement est appliquée à l'élément (6) d'actionnement, dans lequel
le mécanisme de compensation a un élément (2a) de frottement et une surface (1a) antagoniste, qui sont constitués pour former la force (Fv) de pression de renfort par frottement lors de l'application de la force (F_{B}) d'actionnement, et
l'élément (2a) de frottement et la surface (1a) antagoniste sont constitués pour provoquer la force (Fv) de pression de renfort par une force (F_{A}) d'appui, qui provient d'un renvoi de la force (Fs) d'actionnement, dans lequel
la force (Fv) de pression de renfort a au moins la valeur de la force (F_{A}) d'appui, **caractérisé en ce que**
la surface (1a) antagoniste est constitué en surface d'une rainure, qui s'étend suivant la sens (X) d'actionnement, et
l'élément (2a) de frottement est constitué en languette, qui est constituée pour être guidée dans la rainure suivant le sens (X) d'actionnement.

2. Mécanisme d'actionnement suivant la revendication 1, dans lequel
le mécanisme de compensation est constitué pour réduire la force (Fv) de pression de renfort entre l'élément (1) de transmission et l'élément (6) d'actionnement, si une force (F_{B}) d'actionnement n'est pas appliquée à l'élément (6) d'actionnement et/ou si l'élément d'actionnement se trouve dans une position finale, et/ou dans lequel
l'élément (2a) de frottement et la surface (1a) antagoniste sont constitués pour permettre un déplacement relatif de l'élément (1) de transmission par rapport à l'élément (6) d'actionnement parallèlement au sens (X) d'actionnement, si une force (F_{B}) d'actionnement n'est pas appliquée à l'élément (6) d'actionnement et/ou si l'élément (6) d'actionnement se trouve dans la position finale.

3. Mécanisme d'actionnement suivant l'une des revendications précédentes, dans lequel
la rainure est constituée sous la forme d'une rainure se rétrécissant transversalement au sens (X) d'actionnement, dans lequel la surface (1a) antagoniste et une autre surface (1b) antagoniste, qui s'étend suivant le sens (X) d'actionnement, forment le rétrécissement.

4. Mécanisme d'actionnement suivant l'une des revendications précédentes, dans lequel
le mécanisme de compensation a un élément (2) de coincement, qui est constitué pour le renvoi de la force (F_{B}) d'actionnement en la force (F_{A}) d'appui, dans lequel
le niveau de la force (F_{A}) d'appui est proportionnel au niveau de la force (F_{B}) d'actionnement en étant, de préférence, plus haut, et/ou dans lequel
le mécanisme de compensation est constitué pour réduire la force (Fv) de pression de renfort, en particulier à zéro.

5. Mécanisme d'actionnement suivant la revendication 4, dans lequel
l'élément (2) de coincement est constitué d'une seule pièce avec l'élément (6) d'actionnement ou est relié par une liaison articulée, de préférence une liaison articulée sans couple, à l'élément (6) d'actionnement.

6. Mécanisme d'actionnement suivant l'une des revendications 4 ou 5, dans lequel
l'élément (2a) de frottement est prévu sur l'élément (6) d'actionnement ou sur l'élément (2) de coincement et la surface (1a) antagoniste est prévue sur l'élément (1) de transmission, ou dans lequel
l'élément (2a) de frottement est prévu sur l'élément (1) de transmission et la surface (1a) antagoniste est prévue sur l'élément (6) d'actionnement ou sur l'élément (2) de coincement.

7. Mécanisme d'actionnement suivant l'une des revendications précédentes, dans lequel
il est prévu entre l'élément (6) d'actionnement et l'élément (1) de transmission, un élément (4) de serrage, qui est constitué pour produire une force (Fs) de pression de serrage, laquelle est constituée de manière à améliorer la transmission à frottement de la force (F_{B}) d'actionnement.

8. Mécanisme d'actionnement suivant la revendication 7, dans lequel
l'élément (4) de serrage est constitué sous la forme d'un élément de ressort, qui produit la force (Fs) de pression de serrage, et
l'élément de ressort est de constitution fermée, en étant en particulier sous la forme d'un anneau, et est constitué pour appliquer la force (Fs) de pression de serrage, étendue au volume, entre l'élément (1) de transmission et l'élément (6) d'actionnement.

9. Mécanisme d'actionnement suivant l'une des revendications 2 à 8, dans lequel
la position finale est définie par une butée (3), qui est constituée fixe en emplacement par rapport à l'élément (1) de transmission et l'élément (6) d'actionnement.

10. Mécanisme d'actionnement suivant la revendication 9, dans lequel
l'élément (2) de coincement est constitué pour s'appliquer à la butée (3) dans la position finale de l'élément (6) d'actionnement, et entre la butée (3) et l'élément (2) de coincement agit une force, qui s'oppose au frottement entre l'élément (2a) de frottement et la surface (1a) antagoniste.

11. Mécanisme d'actionnement suivant la revendication 9 ou 10, dans lequel
dans la position finale, de préférence sur la butée (3), est prévue une géométrie de levage, qui est constituée pour mettre l'élément (2a) de frottement à distance de la surface (1a) antagoniste, ou au moins pour faire cesser le frottement entre l'élément (2a) de frottement et la surface (1a) antagoniste.

12. Mécanisme d'actionnement suivant l'une des revendications 2 à 11, dans lequel
les surfaces (1a, 1b) antagonistes et/ou l'élément (2a) de frottement sont constitués en ayant un grand coefficient de frottement.

13. Mécanisme d'actionnement suivant l'une des revendications précédentes, dans lequel
le mécanisme d'actionnement est constitué pour appliquer la force (F_{B}) d'actionnement pneumatiquement, hydrauliquement, mécaniquement, électriquement et/ou magnétiquement à l'élément (6) d'actionnement.

14. Actionneur d'embrayage comportant un mécanisme d'actionnement suivant l'une des revendications 1 à 13, dans lequel
l'actionneur d'embrayage est constitué pour le débrayage d'un embrayage par l'élément (1) de transmission.

15. Actionneur d'embrayage suivant la revendication 14, dans lequel
le mécanisme d'actionnement est constitué pour, si une force (F_{B}) d'actionnement ne s'applique pas à l'élément (6) d'actionnement, libérer le déplacement relatif entre l'élément (6) d'actionnement et l'élément (1) de transmission, et/ou dans lequel
un élément (1) de transmission est soumis à une force élastique de précontrainte dans le sens (X) d'actionnement, qui est produite par un élément de ressort, dans lequel
la force élastique de précontrainte est constituée de manière à ce qu'elle soit, si une force (F_{B}) d'actionnement ne s'applique pas à l'élément (6) d'actionnement, en équilibre avec une force élastique de précontrainte d'un ressort d'embrayage.
